(19) Europäisches Patentamt

European Patent Office

Office européen des brevets

(11) **EP 1 473 210 B1**

(12) **EUROPÄISCHE PATENTSCHRIFT**

(45) Veröffentlichungstag und Bekanntmachung des Hinweises auf die Patenterteilung:
**20.07.2005 Patentblatt 2005/29**

(51) Int Cl.⁷: **B61L 25/02**

(21) Anmeldenummer: **03291064.8**

(22) Anmeldetag: **28.04.2003**

(54) **Verfahren und Vorrichtung zur Pulsbreitenfehlererkennung**

Method and apparatus for pulse width error detection

Méthode et dispositif pour la détection des erreurs dans une durée d'impulsion

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**03.11.2004 Patentblatt 2004/45**

(73) Patentinhaber: **ALCATEL**
**75008 Paris (FR)**

(72) Erfinder:
• **Gebert, Thomas**
**74626 Bretzfeld (DE)**

• **Lauterberg, Dr. Veit**
**70736 Fellbach-Oeffingen (DE)**

(74) Vertreter: **Menzietti, Domenico, Dipl.-Ing et al**
**Alcatel**
**Intellectual Property Department, Stuttgart**
**70430 Stuttgart (DE)**

(56) Entgegenhaltungen:
**US-A- 4 669 046       US-A- 5 583 773**
**US-A- 5 960 377**

**Beschreibung**

Die Erfindung betrifft ein Verfahren zur Pulsbreitenfehlererkennung. Das Verfahren ist insbesondere geeignet zur Pulsbreitenfehlererkennung in Zugsicherungssystemen und speziell für (Weg-)Impulsgeber in einer SDMU (Speed and Distance Measurement Unit).

Zugsicherungssysteme bilden einen wesentlichen Bestandteil der Eisenbahnsicherungstechnik. Moderne Zugsicherungssysteme erlauben dem Triebfahrzeugführer die erweiterte Vorausschau (elektrische Sicht) über eine große Distanz der vor ihm liegenden Strecke und sind somit Voraussetzung für den Hochgeschwindigkeitsverkehr. Die Zugsicherungssysteme und die beteiligten Komponenten übernehmen dabei Sicherheitsverantwortung. Eine wesentliche Komponente ist dabei die SDMU (Speed and Distance Measurement Unit).

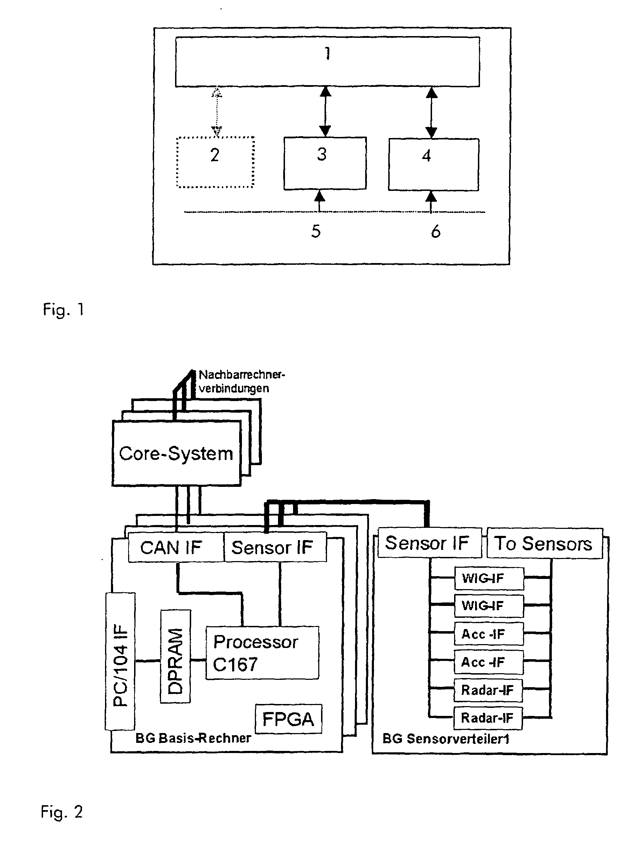

Fig. 1 zeigt die Einbindung einer SDMU 3 in den modularen Aufbau einer Zugsicherung. Auf dem Triebfahrzeug eines Zuges (ICE, TGV, S-Bahn, U-Bahn, usw.) sind verschiedene on-board Einheiten angeordnet. In einer ersten Einheit 1 werden die zentralen Zugsicherungsfunktionen bearbeitet. Einheit 1 hat mehrere Schnittstellen zu anderen modular aufgebauten Einheiten, darunter die SDMU 3, einer Einheit 4 zur Ortungsreferenz und anderen Komponenten 2. SDMU 3 und Einheit 4 haben zudem jeweils ein oder mehrere Schnittstellen zu entlang den Schienen angeordneten Referenzpunkten. Für die Ortungsreferenz sind dies abhängig von der Systemarchitektur im Falle von LZB (Linienzugbeeinflussung) z.B. Kreuzungsstellen und im Falle von ETCS (European Train Control System) Balisen.

Die Aufgabe der SDMU besteht in der relativen Wegmessung (Feinortung) zur jeweils gültigen Ortsreferenz und der Geschwindigkeitsmessung. Diese Daten müssen von der SDMU sicher ermittelt werden. Die Sicherheit der Weg- und Geschwindigkeitsinformation wird durch Angabe jeweils eines Vertrauensintervalls um den Nominalwert (Schätzwert) für den Weg und die Geschwindigkeit erreicht; der wirkliche Wert (Ist- Wert) muss mit definiert hoher Wahrscheinlichkeit innerhalb dieses Intervalls liegen. Weiter hat die SDMU die Aufgabe der Beschleunigungsermittlung, der sicheren relativen Fahrtrichtungserkennung und der sicheren Stillstandsermittlung.

Fig. 2 zeigt eine Übersicht über die Hardware-Komponenten einer SDMU.

Die SDMU beinhaltet 3 parallele, unabhängige SDMU-Rechner (Basisrechner) zur Vorverarbeitung und einen übergeordneten, sicheren Rechner mit Voter. Als sicherer Rechner wird das Core-System eingesetzt. Als Sensoren können Dopplerradar (Radar), Wegimpulsgeber (WIG) und Beschleunigungsmesser (Acc) eingesetzt werden. Für zukünftige Anwendungen kann ebenso GPS, eine Inertialplattform, etc. eingesetzt werden.

Alle SDMU-Rechner greifen über die Baugruppe (BG) Sensorverteiler auf die Sensordaten derselben Sensoren zu und ermitteln daraus unabhängig von den anderen SDMU-Rechnern die Weg- und Geschwindigkeitsinformation und das Vertrauensintervall für Weg und Geschwindigkeit. Die SDMU-Rechner haben keinen Datenaustausch untereinander. Die Weg- und Geschwindigkeitsinformation und die Vertrauensintervalle für Weg und Geschwindigkeit werden 3-kanalig an den sicheren Rechner (Core-System) weitergegeben.

Die Baugruppe (BG) Basis-Rechner ist im Europakartenformat aufgebaut und besitzt ein oder mehrere Schnittstellen (IF) zum Sensorverteiler. Sie sammelt die Sensorrohdaten, berechnet je nach Ausführung der SDMU die Odometriedaten und kommuniziert mit dem sicheren Fahrzeugrechner. Der Basis-Rechner ist für die Bearbeitung schneller Ein-/Ausgabe-Operationen optimiert. Er beinhaltet dazu z.B. einen Prozessor (Processor C167), einen Speicher (DPRAM=Dual Port Random Access Memory), ein FPGA (=Free Programmable Gate Array) sowie eine Schnittstelle (CAN IF) zum Core-System und gegebenenfalls ein oder mehr weitere Schnittstellen (PC/104 IF) zu Personalcomputern, etc.

Es sind ein oder zwei Sensorverteilerbaugruppen vorgesehen, die im Europakartenformat aufgebaut sind, mit Zuführung der Signale von den Sensoren über das Backpanel. Die Sensorsignale werden abhängig vom Sensortyp auf einen einheitlichen Pegel umgesetzt. Damit ist gewährleistet, dass Änderungen in den Sensoren immer nur auf die Sensorverteilerbaugruppen begrenzt bleiben und keine Auswirkungen auf den Basis-Rechner haben.

Ausgangssignale von Impulsgebern mit zwei Systemen können fehlerbehaftet sein.

Aus der US 4,660,046 ist ein Anti-Blockiersystem bekannt, bei dem die Radumdrehungen durch Radsensoren erfasst werden. Weg und Geschwindigkeit werden auf Basis der Pulsfolgen der Sensoren berechnet. Die Pulsabstände werden zur Berechnung aktueller Verzögerungs- und Beschleunigungswerte herangezogen. Zur Vermeidung von Fehlern in der Geschwindigkeitsberechnung werden aufeinander folgende Geschwindigkeitswerte verglichen.

Aufgabe der Erfindung ist es, ein Verfahren zur Überwachung von Impulsgebern bereitzustellen.

Gelöst wird die Aufgabe durch ein Verfahren gemäß Patentanspruch 1. Ein erfindungsgemäßes Verfahren zur Pulsbreitenfehlererkennung für einen Impulsgeber beinhaltet folgende Schritte: Ermittlung der Pulsbreite eines empfangenen Impulses, Vergleich der ermittelten Pulsbreite mit einer Minimalpulsbreite, Registrieren eines Pulsbreitenfehlers im Falle, dass der Vergleich ergibt, dass die ermittelte Pulsbreite geringer ist als die Minimalpulsbreite.

Der Impulsgeber ist z.B. ein Wegimpulsgeber oder ein Hallgeber. Der Impulsgeber ist z.B. für zwei oder mehr Systeme/Spuren ausgelegt. Das erfindungsgemäße Verfahren kann auf jede Spur separat angewendet werden, so dass eine Mehrfachanwendung möglich ist für den Fall, dass alle Spuren überwacht werden sollen. Die Implementierung des Verfahrens ist durch Hardware, Software oder Hardware + Software möglich.

In einer besonderen Ausgestaltung des Verfahrens erfolgt die Ermittlung der Pulsbreite mittels eines Zählers, der gestartet wird wenn eine Flanke eines Impulses von 0 auf 1 empfangen wird und gestoppt wird wenn eine Flanke des Impulses von 1 auf 0 empfangen wird.

Alternativ kann der Zähler auch gestartet werden wenn eine Flanke eines Impulses von 1 auf 0 empfangen wird und gestoppt werden wenn eine Flanke des Impulses von 0 auf 1 empfangen wird.

Zusätzlich kann auch ein zweiter Zähler vorhanden sein, der gestartet wird, wenn eine Flanke eines Impulses von 1 auf 0 empfangen wird und gestoppt wird, wenn eine Flanke des Impulses von 0 auf 1 empfangen wird, und wenn der erste Zählers gestartet wird wenn eine Flanke eines Impulses von 0 auf 1 empfangen wird und gestoppt wird wenn eine Flanke des Impulses von 1 auf 0 empfangen wird, so dass fortlaufend der gesamte empfangene Puls überwacht wird. Für jeden Zähler wird jeweils ein Vergleich der ermittelten Pulsbreite mit einer Minimalpulsbreite durchgeführt sowie ein Registrieren eines Pulsbreitenfehlers im Falle, dass der Vergleich ergibt, dass die ermittelte Pulsbreite geringer ist als die Minimalpulsbreite.

Als weitere Alternative kann ein Zähler vorhanden sein, der gestartet wird, wenn eine beliebige Flanke eines Impulses empfangen wird und bei Erreichen eines bestimmten Wertes oder einer nächsten beliebigen Flanke stoppt. Wenn der bestimmte Wert nicht erreicht wurde, dann ist die ermittelte Pulsbreite geringer als die Minimalpulsbreite.

In einer weiteren Ausgestaltung des Verfahrens wird die Minimalpulsbreite berechnet aus den Parametern minimaler Phasenversatz, minimaler Raddurchmesser, maximale Fahrzeuggeschwindigkeit, maximale Anzahl Wegimpulse pro Radumdrehung. Insbesondere wird die Minimalpulsbreite berechnet aus (minimaler Phasenversatz x minimaler Raddurchmesser x Pi) / (maximale Fahrzeuggeschwindigkeit x maximale Anzahl Wegimpulse pro Radumdrehung x 180°). Durch die Verwendung der Parameter kann zum einen die Minimalpulsbreite für jeden Zug individuell festgelegt werden. Zum anderen kann während der Fahrt für verschiedene zu überwachende Impulse jeweils eine on-board variierte, z.B. an die Fahrzeuggeschwindigkeit angepasste Minimalpulsbreite ermittelt werden. Je genauer die Minimalpulsbreite desto mehr Störimpulse können registriert werden. Anstelle einer on-line Berechnung kann die Minimalpulsbreite selbst als einstellbarer Parameter ausgeführt sein, der z.B. bei der Installation der on-board Zugeinrichtungen oder der SDMU programmiert wird.

In einer weiteren Ausgestaltung des Verfahrens wird die Minimalpulsbreite berechnet aus (minimaler Phasenversatz x aktuelle Periodendauer) / 180°. Anstelle der aktuellen Periodendauer kann auch die Periodendauer des zuletzt empfangenen Impulses oder die Periodendauer des vorletzten Impulses jeweils abzüglich eines Wertes, der eine maximal mögliche zwischenzeitliche Erhöhung der Drehzahl berücksichtigt, als Referenz verwendet werden.

In einer weiteren Ausgestaltung des Verfahrens wird die Pulsbreite jedes empfangenen Impulses ermittelt, jede ermittelte Pulsbreite wird mit einer Minimalpulsbreite verglichen, wobei der Wert der Minimalpulsbreite von Impuls zu Impuls variieren kann, und ein Pulsbreitenfehler wird registriert im Falle, dass ein Vergleich ergibt, dass die ermittelte Pulsbreite geringer ist als die zugehörige Minimalpulsbreite. Durch das adaptive Nachführen und Anpassen der Minimalpulsbreite, z.B. an die aktuelle Geschwindigkeit, kann eine genauere Pulsbreitenüberwachung erfolgen.

Ein erfindungsgemäßes FPGA mit einem speziellen Programm zur Pulsbreitenfehlererkennung für einen Impulsgeber beinhaltet Anweisungen zur Ermittlung der Pulsbreite eines empfangenen Impulses, zum Vergleich der ermittelten Pulsbreite mit einer Minimalpulsbreite und zum Registrieren eines Pulsbreitenfehlers im Falle, dass der Vergleich ergibt, dass die ermittelte Pulsbreite geringer ist als die Minimalpulsbreite.

Ein erfindungsgemäßes Computerprogrammprodukt zur Pulsbreitenfehlererkennung für einen Impulsgeber beinhaltet Anweisungen zur Ermittlung der Pulsbreite eines empfangenen Impulses, zum Vergleich der ermittelten Pulsbreite mit einer Minimalpulsbreite und zum Registrieren eines Pulsbreitenfehlers im Falle, dass der Vergleich ergibt, dass die ermittelte Pulsbreite geringer ist als die Minimalpulsbreite.

Die Anweisungen sind beispielsweise in der Programmiersprache C+ + geschrieben.

Das Computerprogrammprodukt kann auf einem Datenträger gespeichert sein, z.B. CD-ROM.

Welche Funktionen im FPGA und welche durch ein Computerprogrammprodukt realisiert sind ist für die Implementierung der Erfindung unerheblich. Insofern ist auch eine Kombination aus beiden möglich. Die Erfindung kann infolgedessen auch aus einer Kombination aus Hard- und Software realisiert sein.

Eine erfindungsgemäße SDMU mit mindestens zwei Basisrechnern, wobei jeder Basisrechner mindestens einen Prozessor und/oder ein FPGA beinhaltet, ist dadurch gekennzeichnet, dass jedes FPGA und/oder jeder Prozessor mit einem speziellen Programm geladen ist, das Anweisungen beinhaltet zur Ermittlung der Pulsbreite eines empfangenen Impulses, zum Vergleich der ermittelten Pulsbreite mit einer Minimalpulsbreite und zum Registrieren eines Pulsbreitenfehlers im Falle, dass der Vergleich ergibt, dass die ermittelte Pulsbreite geringer ist als die Minimalpulsbreite.

Eine erfindungsgemäße Vorrichtung zur Pulsbreitenfehlererkennung für einen Impulsgeber beinhaltet einen Zähler und eine Auswerteschaltung, wobei der Zähler die Pulsbreite eines empfangenen Impulses ermittelt und die Auswerteschaltung die ermittelte Pulsbreite mit einer Minimalpulsbreite vergleicht und einen Pulsbreitenfehler registriert im Falle, dass der Vergleich ergibt, dass die ermittelte Pulsbreite geringer ist als die Minimalpulsbreite.

Der Zähler ist z.B. in Software oder Hardware realisiert. Die Auswerteschaltung ist z.B. in Software und/oder Hardware realisiert. Sie beinhaltet z.B. einen Prozessor oder einen Teil davon, z.B. einen Teil des bereits in einem Basisrechner einer SDMU vorhandenen Prozessors, einen Vergleicher, z.B. Komparator, Schaltungslogik und/oder Softwareanweisungen.

In einer besonderen Ausgestaltung der Erfindung wird die Pulsbreitenfehlererkennung zusätzlich zu einer anderen Fehlererkennung und/oder Überwachung für einen Impulsgeber durchgeführt, z.B. einer Gleichtaktfehlererkennung und/oder einer Pulsfolgefehlererkennung.

Vorteilhafte Ausgestaltungen der Erfindung sind den abhängigen Ansprüchen und der nachfolgenden Beschreibung zu entnehmen.

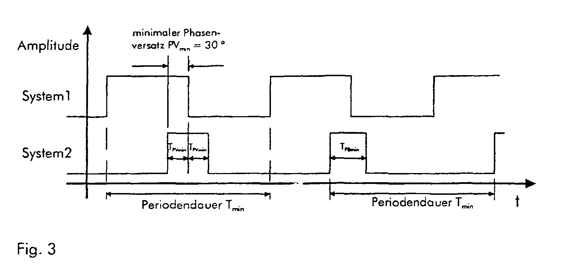

Im folgenden wird ein Ausführungsbeispiel der Erfindung unter Zuhilfenahme von Figur 3 erläutert.

Fig. 3 zeigt ein Diagramm mit Amplituden der Signale von zwei Systemen eines Impulsgebers.

Die Pulsbreitenfehlererkennung überprüft alle Systeme/Spuren (nachfolgend z. B. zwei) eines Impulsgebers, z.B. eines Wegimpuls- oder Hallgebers, unabhängig voneinander auf Unterschreiten einer minimalen Pulsbreite $T_{PBmin}$. Bei der Pulsbreitenfehlererkennung wird die Zeit zwischen zwei Flanken beliebiger Polarität eines Systems / einer Spur gemessen und geprüft, ob die Zeit für die minimale Pulsbreite $T_{PBmin}$ unterschritten wurde.

Der minimale Phasenversatz (Überlappung der Signale der beiden Systeme) $PV_{min}$ der zwei Systeme/Spuren eines Wegimpuls- /Hallgebers wird in den Herstellerspezifikationen immer angegeben. Die minimale Periodendauer $T_{min}$ tritt bei maximaler Geschwindigkeit bzw. Drehzahl auf.

Da $PV_{min}$ niemals unterschritten werden darf, gilt für beliebige Periodendauer $T \geq T_{min}$:

$$T_{PVmin} = PV_{min}/360° * T_{min}$$

$PV_{min}$ beträgt üblicherweise mindestens 30 ° ($T_{PVmin}$ = 1/12 $T_{min}$), um eine sichere Funktion und Fahrtrichtungserkennung zu gewährleisten.

Damit wird die minimale Zeit für die Pulsbreite $T_{PBmin}$ eines Wegimpulses berechnet:

$$T_{PBmin} = 2 * T_{PVmin} = 2 * PV_{min}/360° * T_{min}.$$

Alle Pulse kleiner $T_{PBmin}$ müssen durch Fehler oder Störungen im Wegimpuls /Hallgeber, den Verbindungsleitungen oder den Stromversorgungen (Spikes auf der Spannungsversorgung) verursacht worden sein.

Die Überwachung funktioniert ebenfalls bei nur einem System/Spur, wenn bekannt ist, wie groß das minimale Tastverhältnis (Zeitdauer des High-Pegels im Verhältnis zum Low-Pegel) ist.

Beispielhafte Berechnung der minimal zulässigen Pulsbreite $T_{PBmin}$ für minimalen Raddurchmesser, maximale Geschwindigkeit und maximale Anzahl Wegimpulse pro Radumdrehung: Vorgaben:

minimaler Phasenversatz $PV_{min}$ = 30 ° ($T_{PBmin}$ = 1/6 $T_{min}$)

minimaler Raddurchmesser $RD_{min}$ = 0,700 m

maximale Fahrzeuggeschwindigkeit $v_{max}$ = 500 km/h = 138,89 m/s

maximale Anzahl Wegimpulse pro Radumdrehung $I_{max}$ = 200

Die maximale Wegimpuls- / Hallgeberfrequenz wird berechnet aus:

$$WIG\ f_{max} = I_{max} * v_{max} / (RD_{min} * \pi) = 12631\ Hz$$

Daraus resultiert die minimale Periodendauer $T_{min}$ des Wegimpuls-/Hallgebersignales eines Systems:

$$T_{min} = 1/WIG\ f_{max} = (RD_{min} * \pi) / (v_{max} * I_{max}) = 79,17\ \mu s$$

Folglich ergibt sich $T_{PBmin}$ bei der Annahme einer minimalen Überlappung von 30° der beiden Systeme/ Spuren zu:

$$T_{PBmin} = 1/6 \, T_{min} = 13{,}19 \, \mu s$$

Alle Wegimpulse die kürzer als 13,19 µs sind, können nicht durch den Wegimpulsgeber erzeugt worden sein. Die Pulsbreitenfehlererkennung offenbart einen Fehler, wenn eines der beiden Systeme/Spuren Wegimpulse ausgibt, die eine geringere Pulsbreite besitzen, als die minimal zulässige Pulsbreite $T_{PBmin} = 13{,}19 \, \mu s$.

Beispiel für eine Realisierung:

Die in der SDMU in einem FPGA realisierte Pulsbreitenfehlererkennung erkennt einen Pulsbreitenfehler bei einer Wegimpulsbreite kleiner als 12,8 µs. Die Überwachung der Pulsbreite erfolgt immer, d. h. auch bei Stillstand wird geprüft, ob kurze Wegimpulse auftreten.

Bei jeder Wegimpulsflanke eines Systems wird ein mit einer hohen Frequenz getakteter Zähler (Auflösung 200 ns) gestartet. Wenn innerhalb von 12,8 µs die nächste Flanke auf dem gleichen System/Spur auftritt, dann wird ein Pulsbreitenfehler ausgegeben. Die Überwachung auf 12,8 µs ($2^6 * 200$ ns) wurde aus Gründen der einfacheren Realisierung gewählt.

Eine Verbesserung der Pulsbreitenfehlererkennung kann erreicht werden, wenn der Wert für $T_{PBmin}$ aus den vier Parametern $PV_{min}$ (minimaler Phasenversatz), $RD_{min}$ (minimaler Raddurchmesser), $v_{max}$ (maximale Fahrzeuggeschwindigkeit) und $I_{max}$ (maximale Anzahl Wegimpulse pro Radumdrehung) berechnet und als Parameter an die Pulsbreitenfehlererkennung übergeben wird.

Eine weitere Verbesserung kann erzielt werden, wenn laufend die aktuelle Periodendauer T übergeben wird, und daraus $T_{PBmin}$ bestimmt wird. Wenn die aktuelle Periodendauer nicht vorhanden ist, kann statt dessen die letzte Periodendauer T abzüglich eines Wertes für die maximal mögliche Erhöhung der Drehzahl übergeben werden.

## Patentansprüche

1. Verfahren zur Pulsbreitenfehlererkennung für einen Impulsgeber, **gekennzeichnet durch** folgende Schritte: Ermittlung der Pulsbreite eines empfangenen Impulses, Vergleich der ermittelten Pulsbreite mit einer Minimalpulsbreite ($T_{PBmin}$), Registrieren eines Pulsbreitenfehlers im Falle, dass der Vergleich ergibt, dass die ermittelte Pulsbreite geringer ist als die Minimalpulsbreite ($T_{PBmin}$).

2. Verfahren gemäß Patentanspruch 1, **dadurch gekennzeichnet, dass** die Ermittlung der Pulsbreite mittels eines Zählers erfolgt, der gestartet wird wenn eine Flanke eines Impulses von 0 auf 1 empfangen wird und gestoppt wird wenn eine Flanke des Impulses von 1 auf 0 empfangen wird.

3. Verfahren gemäß Patentanspruch 1, **dadurch gekennzeichnet, dass** die Minimalpulsbreite ($T_{PBmin}$) bei Impulsgebern mit mehr als einem System berechnet wird aus den Parametern minimaler Phasenversatz ($T_{Pvmin}$), minimaler Raddurchmesser, maximale Fahrzeuggeschwindigkeit, maximale Anzahl Wegimpulse pro Radumdrehung.

4. Verfahren gemäß Patentanspruch 1, **dadurch gekennzeichnet, dass** die Minimalpulsbreite ($T_{PBmin}$) bei Impulsgebern mit mehr als einem System berechnet wird aus (minimaler Phasenversatz ($T_{PVmin}$) x minimaler Raddurchmesser x Pi) / (maximale Fahrzeuggeschwindigkeit x maximale Anzahl Wegimpulse pro Radumdrehung x 180°).

5. Verfahren gemäß Patentanspruch 1, **dadurch gekennzeichnet, dass** die Minimalpulsbreite ($T_{PBmin}$) bei Impulsgebern mit mehr als einem System berechnet wird aus (minimaler Phasenversatz ($T_{PVmin}$) x aktuelle Periodendauer) / 180°.

6. Verfahren gemäß Patentanspruch 1, **dadurch gekennzeichnet, dass** die Pulsbreite jedes empfangenen Impulses ermittelt wird, jede ermittelte Pulsbreite mit einer Minimalpulsbreite ($T_{PBmin}$) verglichen wird, wobei der Wert der Minimalpulsbreite ($T_{PBmin}$) von Impuls zu Impuls variieren kann, und ein Pulsbreitenfehler registriert wird im Falle, dass ein Vergleich ergibt, dass die ermittelte Pulsbreite geringer ist als die zugehörige Minimalpulsbreite.

7. Frei programmierbares Gate-Array (FPGA) mit einem speziellen Programm zur Pulsbreitenfehlererkennung für einen Impulsgeber, **gekennzeichnet durch** Anweisungen zum Ausführen der Verfahrensschritte nach Anspruch 1.

8. Computerprogrammprodukt zur Pulsbreitenfehlererkennung für einen Impulsgeber, **gekennzeichnet durch** Anweisungen zum Ausführen der Verfahrensschritte nach Anspruch 1.

9. Vorrichtung zur Orts- und Geschwindigkeitsbestimmung (SDMU) mit mindestens zwei Basisrechnern, wobei jeder Basisrechner mindestens einen Prozessor und/oder ein FPGA beinhaltet, **dadurch gekennzeichnet, dass** jedes FPGA und/oder jeder Prozessor mit einem speziellen Programm geladen ist, das Anweisungen beinhaltet zur Ausführung der Verfahrensschritte nach Anspruch 1.

**10.** Vorrichtung zur Pulsbreitenfehlererkennung für einen Impulsgeber, **gekennzeichnet durch** einen Zähler und eine Auswerteschaltung, wobei der Zähler die Pulsbreite eines empfangenen Impulses ermittelt und die Auswerteschaltung die ermittelte Pulsbreite mit einer Minimalpulsbreite vergleicht und eines Pulsbreitenfehler registriert im Falle, dass der Vergleich ergibt, dass die ermittelte Pulsbreite geringer ist als die Minimalpulsbreite.

## Claims

**1.** A method for pulse-width error detection for a pulse generator, **characterized by** the following steps: Determination of the pulse width of a received pulse, comparison of the detected pulse width with a minimum pulse width ($T_{PBmin}$), registration of a pulse-width error in the event that the comparison shows that the detected pulse width is less than the minimum pulse width ($T_{PBmin}$).

**2.** Method according to Claim 1, **characterized in that** the pulse width is determined by means of a counter, which is started when an edge of a pulse from 0 to 1 is received, and stopped when an edge of the pulse from 1 to 0 is received.

**3.** Method according to Claim 1, **characterized in that** the minimum pulse width ($T_{PBmin}$) for pulse generators with more than one system is calculated from the parameters minimum phase offset ($T_{Pvmin}$), minimum wheel diameter, maximum vehicle speed, maximum number of distance pulses per wheel revolution.

**4.** Method according to Claim 1, **characterized in that** the minimum pulse width ($T_{PBmin}$) for pulse generators with more than one system is calculated from (minimum phase offset ($T_{Pvmin}$) x minimum wheel diameter x pi) / (maximum vehicle speed x maximum number of distance pulses per wheel revolution x 180°).

**5.** Method according to Claim 1, **characterized in that** the minimum pulse width ($T_{PBmin}$) for pulse generators with more than one system is calculated from (minimum phase offset ($T_{PVmin}$) x current period length)/180°.

**6.** Method according to Claim 1, **characterized in that** the pulse width of each received pulse is determined, each detected pulse width is compared with a minimum pulse width ($T_{PBmin}$), the value of this minimum pulse width ($T_{PBmin}$) being variable from pulse to pulse, and a pulse-width error is registered in the event that a comparison shows that the detected pulse width is less than the associated minimum pulse width.

**7.** Freely programmable gate array (FPGA) with a special program for pulse-width error detection for a pulse generator, **characterized by** instructions for executing the procedural steps according to Claim 1.

**8.** computer program product for pulse-width error detection for a pulse generator, **characterized by** instructions for executing the procedural steps according to Claim 1.

**9.** Device for determining position and speed (SDMU) with at least two base computers, each base computer including at least one processor and/or one FPGA, **characterized in that** each FPGA and/or each processor is loaded with a special program containing instructions for executing the procedural steps according to Claim 1.

**10.** Device for pulse-width error detection for a pulse generator, **characterized by** a counter and an evaluation circuit, the counter determining the pulse width of a received pulse and the evaluation circuit comparing the detected pulse width with a minimum pulse width and registering a pulse-width error in the event that the comparison shows that Lhe detected pulse width is less than the minimum pulse width.

## Revendications

**1.** Procédé pour la détection d'erreur de largeur d'impulsion pour un générateur d'impulsion, **caractérisé par** les étapes suivantes : calcul de la largeur d'impulsion d'une impulsion reçue, comparaison de la largeur d'impulsion à calculée et d'une largeur d'impulsion minimale ($T_{PBmin}$), enregistrement d'une erreur de largeur d'impulsion dans le cas où la comparaison montre que la largeur d'impulsion calculée est plus faible que la largeur d'impulsion minimale ($T_{PBmin}$).

2. Procédé selon la revendication 1, **caractérisé en ce que** le calcul de la largeur d'impulsion s'effectue au moyen d'un compteur qui est démarré lorsqu'un flanc d'une impulsion est reçu de 0 sur 1 et est arrêté lorsqu'un flanc de l'impulsion est reçu de 1 sur 0.

3. Procédé selon la revendication 1, **caractérisé en ce que** la largeur d'impulsion minimale ($T_{PBmin}$) est calculée dans le cas de générateurs d'impulsion comprenant plus d'un système à partir des paramètres déphasage minimum ($T_{PVmin}$), diamètre de roue minimum, vitesse de véhicule maximum, nombre maximum d'impulsions de déplacement par rotation de roue.

4. Procédé selon la revendication 1, **caractérisé en ce que** la largeur d'impulsion minimale ($T_{PBmin}$) est calculée dans le cas de générateurs d'impulsion comprenant plus d'un système à partir de (déphasage minimum ($T_{PVmin}$) x diamètre de roue minimum x Pi)/(vitesse de véhicule maximum x nombre maximum d'impulsions de déplacement par rotation de roue x 180°).

5. Procédé selon la revendication 1, **caractérisé en ce que** la largeur d'impulsion minimale ($T_{PBmin}$) est calculée dans le cas de générateurs d'impulsion comprenant plus d'un système à partir de (déphasage minimum ($T_{PVmin}$) x durée de période actuelle)/180°.

6. Procédé selon la revendication 1, **caractérisé en ce que** la largeur d'impulsion de chaque impulsion reçue est calculée, chaque largeur d'impulsion calculée est comparée avec une largeur d'impulsion minimale ($T_{PBmin}$), la valeur de la largeur d'impulsion minimale ($T_{PBmin}$) peut varier d'une impulsion à une autre, et une erreur de largeur d'impulsion est enregistrée dans le cas où une comparaison montre que la largeur d'impulsion calculée est plus faible que la largeur d'impulsion minimale spécifique.

7. Réseau de portes prédiffusé librement programmable (FPGA) avec un programme spécial pour la détection d'erreur de largeur d'impulsion pour un générateur d'impulsion, **caractérisé par** des instructions pour l'exécution des étapes de procédé selon la revendication 1.

8. Logiciel informatique pour la détection d'erreur de largeur d'impulsion pour un générateur d'impulsion, **caractérisé par** des instructions pour l'exécution des étapes de procédé selon la revendication 1.

9. Dispositif pour le calcul de l'emplacement et de la vitesse (SDMU) comprenant au moins deux ordinateurs de base, chaque ordinateur de base contenant au moins un processeur et/ou FPGA, **caractérisé en ce que** chaque FPGA et/ou chaque processeur est chargé avec un programme spécial, qui contient des instructions pour l'exécution des étapes de procédé selon la revendication 1.

10. Dispositif pour la détection d'erreur de largeur d'impulsion pour un générateur d'impulsion, **caractérisé par** un compteur et un circuit d'analyse, le compteur calculant la largeur d'impulsion d'une impulsion reçue et le circuit d'analyse comparant la largeur d'impulsion calculée avec la largeur d'impulsion minimale et enregistre une erreur de largeur d'impulsion dans le cas où la comparaison montre que la largeur d'impulsion calculée est plus faible que la largeur d'impulsion minimale.

Fig. 1

Fig. 2

Fig. 3